# EUROPÄISCHE PATENTSCHRIFT

(11) **EP 2 111 962 B1**
(45) Veröffentlichungstag und Bekanntmachung des Hinweises auf die Patenterteilung: **01.08.2018**
(21) Anmeldenummer: 09005584.9
(22) Anmeldetag: 21.04.2009
(51) Int. Cl.: B29C 44/30, B29C 44/32, B29C 44/54, B29C 44/44, B29K 105/04, B29K 25/00

(54) **Verfahren zur Herstellung einer Wärmedämmplatte**
Method for manufacturing a heat insulating board
Procédé de fabrication d'une plaque d'isolation thermique

(30) Priorität: 22.04.2008 DE 102008021305
(43) Veröffentlichungstag der Anmeldung: 28.10.2009
(73) Patentinhaber: Gonon Isolation AG (SA), 8226 Schleitheim (CH)
(72) Erfinder: Gonon, Eugen, 8247 Flurlingen (CH)
(74) Vertreter: Jackisch-Kohl, Anna-Katharina

(56) Entgegenhaltungen:
- EP-A2- 1 544 367
- DE-A1- 19 915 456
- DE-B- 1 281 677
- DE-C1- 4 406 039
- US-A- 2 962 407

## Beschreibung

Die Erfindung betrifft ein Verfahren zur Herstellung eines Formkörpers nach dem Oberbegriff des Anspruches 1.

Solche mehrschichtigen, als Wärmedämmplatten ausgebildeten Formkörper werden beispielsweise im Innenbereich eingesetzt, um auf die Deckschicht einen Putz oder Kleber aufbringen zu können, die auf der Aluminiumschicht keinen ausreichenden Halt hätten. Die mehrschichtigen Wärmedämmplatten haben einen Kern aus einem Kerndämmstoff, der auf beiden Seiten mit einer Dampfsperrschicht versehen ist. Sie wird durch eine aufkaschierte Aluminiumfolie gebildet. Auf die Aluminiumfolien werden Deckschichten aufgebracht, die bei der Herstellung als fertige Platten unter Verwendung eines auf die Aluminiumfolie aufgesprühten oder aufgewalzten Klebstoffs unter Druck aufgebracht werden. Die Herstellung solcher Wärmedämmplatten ist aufwändig und teuer.

Es ist ein Verfahren bekannt (DE 44 06 039 C1), bei dem auf beide Seiten eines Trägermaterials expandierbare Perlen aus EPS aufgebracht werden. Sie werden durch eine Klebeschicht aus niedrig schmelzendem Material gehalten, dessen Schmelztemperatur unterhalb von 100°C liegt. Die Klebeschicht wird auf die Schmelztemperatur erwärmt, um die Perlen mit der Klebeschicht und damit der Deckschicht zu verbinden.

Der Erfindung liegt die Aufgabe zugrunde, das gattungsgemäße Verfahren so auszubilden, dass der Formkörper als Wärmedämmplatte bei gleichen Dämmeigenschaften einfach und kostengünstig hergestellt werden kann.

Diese Aufgabe wird beim gattungsgemäßen Verfahren erfindungsgemäß mit den kennzeichnenden Merkmalen des Anspruches 1 gelöst.

Beim erfindungsgemäßen Verfahren wird als Ausgangsmaterial für die Wärmedämmplatte eine Kernplatte eingesetzt, deren Kern beidseitig mit Dampfsperrschichten versehen ist. Auf die Dampfsperrschichten der Wärmedämmplatte wird die Klebeschicht aus niedrig schmelzendem Material aufgebracht. Auf diese werden die expandierbaren Perlen aus EPS lose aufgeschüttet. Durch die Anwendung von Wärme werden die Perlen expandiert und miteinander verbunden. Da die Klebeschicht auf den Dampfsperrschichten einen niedrigen Schmelzpunkt hat, wird die Klebeschicht bei Anwendung der Wärme erweicht, so dass die expandierten Perlen über die Klebeschichten zuverlässig fest mit den Dampfsperrschichten verbunden werden. Auf diese Weise wird eine mehrschichtige Wärmedämmplatte mit hervorragenden Dämmeigenschaften geschaffen, die dennoch einfach und kostengünstig gefertigt werden kann.

Die Wärmedämmplatte wird in einem kontinuierlichen Verfahren hergestellt. Es werden mit den Dampfsperrschichten versehene Kernplatten aneinandergesetzt, wodurch ein Strang entsteht. Auf ihn werden die Klebeschichten und die Perlen aufgebracht. Sie werden durch Wärmebehandlung expandiert, wodurch die Deckschichten gebildet werden. Da die Klebeschichten während der Wärmebehandlung der Perlen erweichen, werden die expandierten und miteinander verbundenen Perlen über die Klebeschichten auch fest mit den Dampfsperrschichten verbunden. Aus diesem so gebildeten Strang werden die gewünschten bzw. geeigneten Wärmedämmplatten abgelängt.

Die Expansion der Perlen und die Verbindung mit den Dampfsperrschichten erfolgt in einem einzigen Verfahrensschritt. Die zum Expandieren eingesetzte Temperatur reicht aus, auch die Klebeschichten auf den Dampfsperrschichten zum Erweichen zu bringen. Dadurch wird erreicht, dass in einem Zuge die Perlen expandiert und untereinander sowie mit den Dampfsperrschichten fest verbunden werden.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: in vereinfachter Darstellung eine Ausführungsform eines erfindungsgemäßen Verfahrens zur Herstellung einer Wärmedämmplatte,
- Fig. 2 bis Fig. 5: in verschiedenen, nicht erfindungsgemäßen Verfahrensschritten einen Plattenautomaten zur Herstellung der Wärmedämmplatte.

Die herzustellende Wärmedämmplatte 2 hat einen Kern 15, der aus Polyurethan oder aus PIR besteht. Der Kern 15 ist beidseitig mit einer Dampfsperrschicht 16, 17 versehen, welche den Kern 15 auf beiden Seitenflächen vollständig bedeckt. Auf die Dampfsperrschicht 16, 17, die vorzugsweise durch eine aufkaschierte Aluminiumfolie gebildet wird, ist mittels einer Klebeschicht 9, 10 eine Deckschicht 3, 4 aufgebracht. Die Klebeschichten 9, 10 werden durch eine Polyethylenschicht mit niedrigem Schmelzpunkt gebildet. Die Deckschichten 3, 4 werden vorteilhaft durch eine EPS-Hartschaumschicht gebildet.

Um die Wärmedämmplatten herzustellen, werden zunächst die noch nicht mit den Deckschichten 3, 4 versehenen Platten 2 stoßend aneinandergelegt und mittels einer Transporteinrichtung 18 in Transportrichtung 19 transportiert. Die Transportvorrichtung 18 hat eine Bandstraße 20, die von zwei endlos umlaufenden perforierten Stahlbändern 5, 6 begrenzt wird. Die Stahlbänder 5, 6 sind über Antriebsrollen 21, 22; 23, 24 geführt. Die Transportrolle 23 befindet sich im Bereich unterhalb eines Silos 1, in dem sich loses Perlmaterial in Form von EPS-Perlen 25 befindet. Die aneinanderstoßenden Platten bilden einen Plattenstrang, der durch die Bandstraße 20 transportiert wird. Der Plattenstrang wird so unter dem Silo 1 hindurchgeführt, dass die Perlen 25 auf beide Seiten des Plattenstranges gelangen. Der Silo 1 verjüngt sich in Richtung auf einen Auslassstutzen 26 stetig, durch den der Plattenstrang in Transportrichtung 19 transportiert wird. Die aus dem Auslassstutzen 26 austretenden Perlen 25 ummanteln den Plattenstrang in Form einer losen Schüttung. Während sich die Transportrolle 23 in Höhe des Auslassstutzens 26 befindet, liegt die Transportrolle 21 in Transportrichtung 19 mit Abstand hinter dem Auslassstutzen 26.

Der Plattenstrang 2 mit den losen EPS-Perlen 25 gelangt zwischen das Untertrum 27 des oberen Stahlbandes 5 und das Obertrum 28 des unteren Stahlbandes 6. Mit Abstand von der Transportrolle 21 ist die Transportvorrichtung 18 mit einer Verschweißungszone 7, 8 versehen. Sie wird dadurch gebildet, dass durch die Öffnungen der perforierten Stahlbänder 5, 6 von oben und von unten heißer Wasserdampf in die lose Perlenschüttung 25 gefördert wird. Da die Perlen 25 ein Treibgas enthalten, werden die Perlen 25 durch den heißen Wasserdampf expandiert. Durch den entstehenden Expansionsdruck werden die Perlen 25 gegeneinander und gegen eine sich erweichende Klebeschicht 29, 30 gedrückt. Die Klebeschichten 29, 30 sind vorteilhaft durch niedrig schmelzendes Polyethylen gebildet, das sich auf den Aluminiumschichten 16, 17 befindet. Die expandierenden Perlen 25 verschweißen miteinander und werden über die Klebeschichten 29, 30 mit den Aluminiumschichten 16, 17 verklebt.

Die Strömungspfeile in der Verschweißungszone 7, 8 deuten die Breite der Verschweißungszone an. Sie ist in Transportrichtung 19 so breit, dass die Perlen 25 zuverlässig expandiert werden. Der anschließende Bereich des Untertrums 27 und des Obertrums 28 der beiden Bänder 5, 6 ist so gewählt, dass die durch die aufgeschäumten Perlen 25 gebildeten Deckschichten 3, 4 einwandfrei ausgebildet werden. Vorteilhaft ist wenigstens eine Kühlzone 11, 12 vorgesehen, in der durch Wärmeableitung Wärme abgezogen wird, was infolge der Öffnungen in den Bändern 5, 6 problemlos möglich ist. Die Kühlzone 11, 12 ist wiederum in Transportrichtung 19 so lang, dass der aus der Vorrichtung 18 austretende Plattenstrang 14 abgekühlt ist und die Deckschichten 3, 4 dauerhaft fest auf den Aluminiumschichten 16, 17 verklebt sind. Durch die Bänder 5, 6 bzw. deren Trums 27, 28 erhalten die Deckschichten 3, 4 glatte Außenseiten.

Der aus der Vorrichtung 18 austretende Plattenstrang 14 wird in geeignete Plattenformate abgelängt bzw. geschnitten.

Mit dem beschriebenen Verfahren werden die stoßend aneinanderliegenden Platten 2 von den Deckschichten 3, 4 lückenlos überdeckt. Die Klebeschichten 29, 30 zwischen den Aluminiumschichten 16, 17 und den Deckschichten 3, 4 werden in der Verschweißungszone 7, 8 erweicht. Hierzu trägt vorteilhaft bei, dass diese Klebeschichten 29, 30 aus niedrig schmelzendem Polyethylen bestehen, dessen Schmelzpunkt bei etwa 85°C liegt. Dadurch ist gewährleistet, dass eine einwandfreie Verbindung zwischen den Deckschichten 3, 4 und den Aluminiumschichten 16, 17 hergestellt wird.

Da die Perlen 25 mit Abstand vor dem oberen Band 5 auf die Platten 2 lose aufgeschüttet werden, können sich die Perlen 25 bis zum Eintritt in die Bandstraße 20 zwischen den beiden Trums 27, 28 vergleichmäßigen. Der Silo 1 bzw. der Auslassstutzen 26 sind so ausgebildet, dass die Perlen 25 in einer vorgegebenen Dicke auf dem Plattenstrang 2 bzw. auf dem Obertrum 28 des unteren Bandes 6 liegen. Gelangen die lose geschütteten Perlen 25 zwischen die beiden Trums 27, 28, werden sie in der beschriebenen Weise expandiert und miteinander verschweißt sowie über die Klebeschichten 29, 30 fest mit den Aluminiumschichten 16, 17 verklebt. Die Verschweißungszone 7, 8 und die Kühlzone 11, 12 erstrecken sich selbstverständlich über die gesamte Breite der Bänder 5, 6. Die beiden Trums 27, 28 verleihen den Deckschichten 3, 4 eine glatte Oberseite.

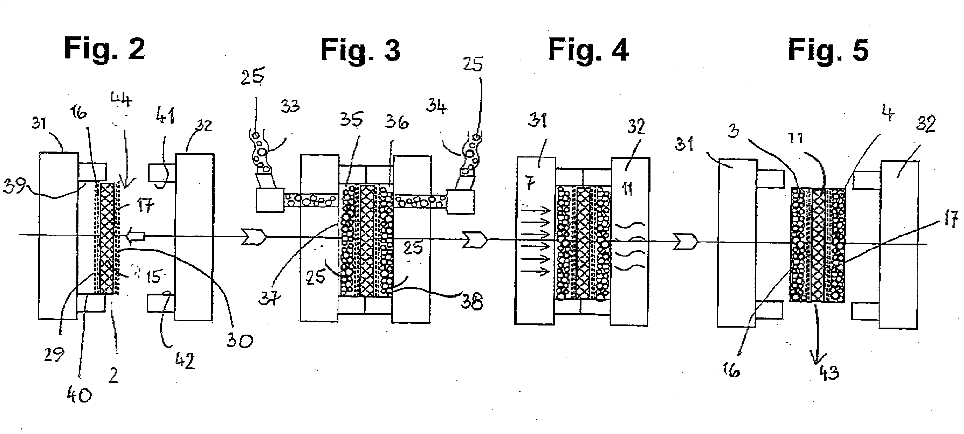

Anhand der Fig. 2 bis 5 wird ein Verfahren beschrieben, bei dem die Wärmedämmplatten 2 einzeln in einem Schäumautomaten hergestellt werden. Er hat zwei Formhälften 31, 32, von denen wenigstens eine relativ zur anderen verfahren werden kann, um den Schäumautomaten zu öffnen bzw. zu schließen. Fig. 2 zeigt den Schäumautomaten in geöffneter Stellung. In die Formhälfte 31 kann die Platte 2 mit dem Kern 15 und den beiden Aluminiumschichten 16 und 17 eingelegt werden. Die beiden Aluminiumschichten 16, 17 sind außenseitig mit den Klebeschichten 29, 30 versehen. Die Platten 2 können von Hand oder mittels eines Handhabungsgerätes in die Formhälfte 31 eingelegt werden. Anschließend wird der Schäumautomat geschlossen, indem die Formhälfte 32 gegen die Formhälfte 31 gefahren wird. Nunmehr werden mit Hilfe von Injektoren 33, 34 die EPS-Perlen 25 in Hohlräume 35, 36 in den beiden Formhälften 31, 32 so lange eingeblasen, bis die formgebende Kontur im Schäumautomaten vollständig mit den Perlen 25 gefüllt ist. Die Hohlräume 35, 36 sind so ausgebildet, dass in ihnen die Deckschichten 3, 4 gebildet werden, welche die Aluminiumschichten 16, 17 bedecken.

Die Hohlräume 35, 36 werden von einem Boden 37, 38 sowie der eingelegten Platte 2 begrenzt. Die Hohlräume 35, 36 sind so gestaltet, dass die Platte 2 mit ihren einander gegenüberliegenden Rändern an Seitenwänden 39, 40; 41, 42 der Hohlräume anliegt. Dadurch bleiben die Ränder der Platte 2 von den Deckschichten 3, 4 frei.

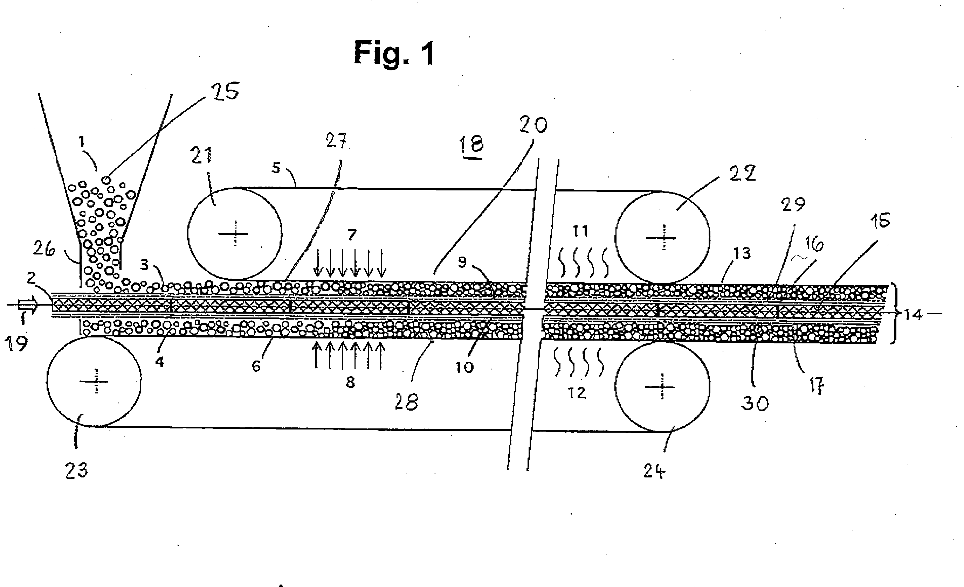

Sobald die Hohlräume 35, 36 mit den Perlen 25 gefüllt sind, wird heißer Wasserdampf in die Hohlräume 35, 36 eingeleitet. Für die Zuführung dieses Wasserdampfes sind die Böden 37, 38 der Hohlräume 35, 36 mit Perforierungen versehen, durch welche der Wasserdampf in die Hohlräume eintreten kann. Durch diesen heißen Wasserdampf expandieren die Perlen 25, wie anhand von Fig. 1 erläutert worden ist. Aufgrund des Expansionsdruckes werden die Perlen 25 miteinander verschweißt und über die sich erweichenden Klebeschichten 29, 30 fest mit den Aluminiumschichten 16, 17 verklebt. Der heiße Wasserdampf, in Fig. 4 durch die Pfeile 7 gekennzeichnet, wird so lange zugeführt, dass die Perlen 25 einwandfrei expandieren können. In Fig. 4 ist die Zuführung des heißen Wasserdampfes nur für die Formhälfte 31 dargestellt. Der heiße Wasserdampf wird auch über den Boden 38 der anderen Formhälfte 32 in den Hohlraum 36 eingeführt. Da die Klebeschichten 29, 30 aus niedrig schmelzenden Polyethylen bestehen, das eine Schmelztemperatur von etwa 85°C hat, wird die Klebeschicht 29, 30 durch den Wasserdampf erweicht, so dass die expandierten Perlen 25 fest mit den Klebeschichten 29, 30 verklebt werden.

Anschließend wird die Zufuhr des Wasserdampfes beendet und die Kühlung in der beschriebenen Weise durch Wärmeableitung eingeleitet, so dass die im Schäumautomaten befindliche Wärmedämmplatte abgekühlt wird. In Fig. 4 ist die Wärmeableitung durch die Symbole 11 gekennzeichnet. Diese Kühlung erfolgt in beiden Formhälften 31, 32, so dass die durch die explandierten Perlen 25 gebildeten Deckschichten 3, 4 sowie die Klebeschichten 29, 30 abgekühlt werden.

Sobald die Wärmedämmplatte ausreichend abgekühlt ist, wird der Schäumautomat geöffnet, indem die Formhälfte 32 von der Formhälfte 31 weggefahren wird. Die fertige Wärmedämmplatte kann dem Schäumautomaten entnommen werden. Dies kann von Hand erfolgen. Es kann aber auch ein Handhabungsgerät vorgesehen werden, das die fertige Wärmedämmplatte 2 in Pfeilrichtung 43 aus der geöffneten Form entfernt. Gleichzeitig kann auf der gegenüberliegenden Seite in Pfeilrichtung 44 (Fig. 2) die nächste Platte 2 für den Beschichtungsvorgang in den geöffneten Schäumautomaten eingelegt werden.

Im Schäumautomaten erfolgt auch eine Pressung der Wärmedämmplatte 2, so dass die Deckschichten 3, 4 zum einen eine glatte Außenseite haben, zum anderen die expandierten Perlen 25 fest miteinander verbunden und über die Klebeschichten 29, 30 dauerhaft fest mit den Aluminiumschichten 16, 17 verbunden sind.

Bei den Wärmedämmplatten 2 verhindern die Aluminiumschichten 16, 17 einen Gasdurchtritt und bilden somit Dampfsperren der Wärmedämmplatte 2. Wie anhand der Ausführungsbeispiele erläutert worden ist, werden die Platten mit dem Kern 15 und den aufgeklebten Aluminiumschichten 16 und 17 angeliefert. Diese Platten werden gemäß dem Verfahren nach Fig. 1 aneinanderstoßend durch die Bandstraße transportiert und durch Beschichten mit den Deckschichten 3, 4 zu einem endlosen Plattenstrang 14 geformt, der anschließend in die geeigneten Plattenformate gesägt bzw. geschnitten wird. Auf den Aluminiumschichten 16, 17 befindet sich bereits die Klebeschicht 9, 10, die in der Verschweißungszone 7, 8 aufgeweicht wird, so dass die expandierten bzw. aufgeschäumten Perlen 25 fest mit den Aluminiumschichten 16, 17 verbunden werden.

Beim Ausführungsbeispiel nach den Fig. 2 bis 5 werden die vorgefertigten Platten in der beschriebenen Weise in den Schäumautomaten eingelegt. Die Aluminiumschichten 16, 17 der vorgefertigten Platte sind ebenfalls mit den Klebeschichten 9, 10 versehen, die beim Zuführen des heißen Wasserdampfes erweichen und somit eine feste Verbindung der aufgeschäumten Perlen 25 mit den Aluminiumschichten 16, 17 ermöglichen. Da die Klebeschichten 9, 10; 29, 30 aus einem Material mit geringer Schmelztemperatur gebildet sind, ist die Anbindung der die Deckschichten 3, 4 bildenden expandierten Perlen 25 zuverlässig möglich.

## Patentansprüche

1. Verfahren zur Herstellung eines Formkörpers, der einen Kern (15) aufweist, auf dessen beide Seiten expandierbare Perlen (25) aus EPS lose aufgeschüttet werden, die anschließend zur Bildung von Deckschichten (3, 4) durch Anwendung von Wärme zum Expandieren gebracht werden, wobei der Formkörper eine Wärmedämmplatte ist und eine Klebeschicht (29, 30) aus niedrig schmelzendem Material aufgebracht wird, dessen Schmelztemperatur unterhalb von 100°C liegt und auf welche die expandierbaren Perlen (25) aufgeschüttet werden, **dadurch gekennzeichnet, dass** anschließend die Wärmetemperatur auf die Schmelztemperatur gebracht wird, so dass die Klebeschicht (29, 30) erweicht, dass als Ausgangsmaterial für die Wärmedämmplatte eine Kernplatte verwendet wird, deren Kern (15) beidseitig mit Dampfsperrschichten (16, 17) versehen ist, die zwischen dem Kern (15) und den beiden Deckschichten (3, 4) liegen, dass die Kernplatten zu einem Strang stoßend hintereinander angeordnet werden, und dass die Perlen (25) auf beide Seiten des Stranges lose aufgeschüttet werden.

2. Verfahren nach Anspruch 1,
**dadurch gekennzeichnet, dass** der Strang kontinuierlich durch wenigstens eine Bandstraße (20) transportiert wird.

3. Verfahren nach Anspruch 2,
**dadurch gekennzeichnet, dass** die Bandstraße (20) einander gegenüberliegende, endlos umlaufende Bänder (5, 6) aufweist, zwischen die der Strang mit den aufgeschütteten Perlen (25) transportiert wird.

4. Verfahren nach Anspruch 3,
**dadurch gekennzeichnet, dass** die Bänder (5, 6) perforiert sind.

5. Verfahren nach Anspruch 4,
**dadurch gekennzeichnet, dass** die Wärme durch die Perforationsöffnungen der Bänder (5, 6) an den Strang herangeführt wird.

6. Verfahren nach Anspruch 5,
**dadurch gekennzeichnet, dass** die Wärme nur über einen Teil der Länge der Bänder (6, 7) zugeführt wird.

7. Verfahren nach einem der Ansprüche 2 bis 6,
**dadurch gekennzeichnet, dass** der Strang vor dem Austritt aus der Bandstraße (20) gekühlt wird.

8. Verfahren nach einem der Ansprüche 2 bis 7,
**dadurch gekennzeichnet, dass** vom Strang nach dem Austritt aus der Bandstraße (20) die Wärmedämmplatten (2) im gewünschten Format abgetrennt werden.

9. Verfahren nach einem der Ansprüche 1 bis 8,
**dadurch gekennzeichnet, dass** die Perlen (25) mit Wasserdampf beaufschlagt werden.

10. Verfahren nach einem der Ansprüche 1 bis 9,
**dadurch gekennzeichnet, dass** die Dampfsperrschichten (16, 17) durch Aluminiumschichten gebildet werden.

11. Verfahren nach einem der Ansprüche 1 bis 10,
**dadurch gekennzeichnet, dass** die Klebeschicht (9, 10; 29, 30) aus Polyethylen besteht.

## Claims

1. A method for manufacturing a moulding which has a core (15), onto both sides of which expandable pearls (25) made of EPS are poured in batch form and then caused to expand to form top layers (3, 4) through the application of heat, wherein the moulding is a heat insulating board and an adhesive layer (29, 30) of material with a low melting point is applied, the melting temperature whereof lies below 100°C and onto which the expandable pearls (25) are poured,
**characterized in that** the heating temperature is then raised to the melting temperature, so that the adhesive layer (29, 30) softens,
that as base material for the heat insulating board a core board is used, the core (15) whereof is provided with vapour barrier layers (16, 17) on both sides which lie between the core (15) and the two top layers (3, 4), that the core boards are arranged abutting behind one another into a strand and that the pearls (25) are poured in batches onto both sides of the strand.

2. The method according to claim 1,
**characterized in that** the strand is continuously transported by at least one conveyor line (20).

3. The method according to claim 2,
**characterized in that** the conveyor line (20) has opposing, endlessly circulating conveyors (5, 6) between which the strand with the pearls (25) poured on is transported.

4. The method according to claim 3,
**characterized in that** the conveyors (5, 6) are perforated.

5. The method according to claim 4,
**characterized in that** the heat is conducted through the perforation openings in the conveyors (5, 6) to the strand.

6. The method according to claim 5,
**characterized in that** the heat is only supplied over part of the length of the conveyors (6, 7).

7. The method according to one of claims 2 to 6,
**characterized in that** the strand is cooled before it leaves the conveyor line (20).

8. The method according to one of claims 2 to 7,
**characterized in that** the heat insulating boards (2) are cut off from the strand in the desired format after it leaves the conveyor line (20).

9. The method according to one of claims 1 to 8,
**characterized in that** the pearls (25) are acted upon by water vapour.

10. The method according to one of claims 1 to 9,
**characterized in that** the vapour barrier layers (16, 17) are formed by aluminium layers.

11. The method according to one of claims 1 to 10,
**characterized in that** the adhesive layer (9, 10; 29, 30) is made of polyethylene.

## Revendications

1. Procédé de fabrication d'un corps moulé qui présente un noyau (15) sur les deux faces duquel des perles expansibles (25) en EPS sont versées et ensuite amenées en expansion pour former des couches couvrantes (3, 4) par application de chaleur, le corps brûlé étant une plaque d'isolation thermique, et une couche de colle (29, 30) composée de matériau à basse fusion est appliquée, couche de colle dont la température de fusion se situe en dessous de 100 °C et sur laquelle les perles expansibles (25) sont versées,
**caractérisé en ce que** la température de chauffage est ensuite amenée à la température de fusion de manière à ce que la couche de colle (29, 30) ramollisse,
sachant qu'on utilise comme matériau initial pour la plaque d'isolation thermique une plaque de noyau dont le noyau (15) est pourvu des deux côtés de couches faisant barrage à la vapeur (16, 17) qui se trouvent entre le noyau (15) et les deux couches couvrantes (3, 4), que les plaques de noyau sont disposées bout-à-bout successivement en un cordon et que les perles (25) sont versées en vrac sur les deux côtés du cordon.

2. Procédé selon la revendication 1,
**caractérisé en ce que** le cordon est transporté en continu par au moins une bande transporteuse (20).

3. Procédé selon la revendication 2,
**caractérisé en ce que** la bande transporteuse (20) présente des bandes superposées et circulant sans fin (5, 6) entre lesquelles le cordon est transporté avec les perles versées dessus (25).

4. Procédé selon la revendication 3,
**caractérisé en ce que** les bandes (5, 6) sont perforées.

5. Procédé selon la revendication 4,
**caractérisé en ce que** la chaleur est apportée au cordon à travers les orifices de perforation des bandes (5, 6).

6. Procédé selon la revendication 5,
**caractérisé en ce que** la chaleur est acheminée seulement sur une partie de la longueur des bandes (6, 7) .

7. Procédé selon une des revendications 2 à 6,
**caractérisé en ce que** le cordon est refroidi avant de quitter la bande transporteuse (20).

8. Procédé selon une des revendications 2 à 7,
**caractérisé en ce que**, après avoir quitté la bande transporteuse (20), les plaques d'isolation thermique (2) en format souhaité sont séparées du cordon.

9. Procédé selon une des revendications 1 à 8,
**caractérisé en ce que** les perles (25) sont aspergées de la vapeur d'eau.

10. Procédé selon une des revendications 1 à 9,
**caractérisé en ce que** les couches faisant barrage à la vapeur d'eau (16, 17) sont constituées par des couches d'aluminium.

11. Procédé selon une des revendications 1 à 10,
**caractérisé en ce que** la couche de colle (9, 10 ; 29, 30) est composée de polyéthylène.
